# EUROPEAN PATENT APPLICATION

(11) **EP 4 668 431 A1**
(43) Date of publication of application: **24.12.2025**
(21) Application number: 25175021.2
(22) Date of filing: 08.05.2025
(51) Int. Cl.: H01M 50/204, H01M 50/271, H01M 50/342, H01M 50/358, H01M 50/264

(54) **POWER BATTERY SYSTEM AND ITS PRESSURE RELIEF ASSEMBLY**

(30) Priority: 20.06.2024 CN 202421424630 U; 20.06.2024 CN 202421424618 U
(71) Applicant: Eve Energy Co., Ltd., Huizhou, Guangdong 516006 (CN)
(72) Inventor: WU, Shenqiong, Huizhou, Guangdong, 516006 (CN)
(74) Representative: Herrero & Asociados, S.L.

(57) **Abstract**

A power battery system (1000) and its pressure relief assembly (100) are provided. The power battery system further includes a plurality of battery modules (4). The battery module (4) is internally provided with a pressure relief cavity (43) and at least one cell (41). The pressure relief assembly includes a guide pipe (1) and an explosion-proof valve (2). The guide pipe includes provided with a plurality of flow-collecting sections (11) and at least one converging section (12). The plurality of flow-collecting sections are respectively in communication with the pressure relief cavities of the plurality of battery modules. The flow-collecting section is provided with a first port and a second port. The first port is in communication with the pressure relief cavity of a corresponding battery module, and the second port is in communication with the flow-converging section. One end of the explosion-proof valve is in communication with the flow-converging section, and the other end is in communication with an exterior of the power battery system. A gap is reserved between both the flow-collecting section and the flow-collecting section and the cells in the power battery system.

## Description

### TECHNICAL FIELD

The present disclosure relates to the field of battery technologies, and in particular, to a power battery system and its pressure relief assembly.

### BACKGROUND

At present, a pressure relief channel of a pressure relief system in a power battery system is formed by a cavity of an aluminium profile box and a bottom protective plate together. After thermal runaway occurs in a cell, thermal runaway substances will pass through a pressure relief cavity, and is finally discharged to the external environment through an explosion-proof valve mounted on the aluminium profile box. When there are a large number of cells, pressure relief valves of all the cells are generally arranged towards the same direction, and then a pressure relief cavity is arranged in the direction, so as to provide a channel for releasing the thermal runaway substances from the cells that may experience thermal runaway.

When there are a large number of cells, the length of the corresponding pressure relief cavity will become longer, and when discharging thermal runaway substances in a conventional pressure relief cavity, it will cause a certain thermal impact on the cells flowing through, and thermal spread cannot be effectively controlled.

### SUMMARY

According to a first aspect, the present disclosure provides a pressure relief assembly applied to a power battery system. The power battery system further includes a plurality of battery modules. The battery module is internally provided with a pressure relief cavity and at least one cell. The pressure relief assembly includes a guide pipe and an explosion-proof valve. The guide pipe includes a plurality of flow-collecting sections and at least one flow-converging section. The plurality of flow-collecting sections are respectively in communication with the pressure relief cavities of the plurality of battery modules. The flow-collecting section is provided with a first port and a second port. The first port is in communication with the pressure relief cavity of a corresponding battery module, and the second port is in communication with the flow-converging section. One end of the explosion-proof valve is in communication with the flow-converging section, and the other end is in communication with an exterior of the power battery system. A gap is reserved between both the flow-collecting section and the flow-converging section and the cells in the power battery system.

According to a second aspect, the present disclosure further discloses a power battery system, which includes a housing, a plurality of battery modules, and the foregoing pressure relief assembly. The plurality of battery modules are provided in the housing. The housing is provided with an assembling hole, and the explosion-proof valve is mounted in the assembling hole.

In the pressure relief assembly for a power battery system provided in the present disclosure, by designing and assembling a storage component of the power battery system in the form of battery modules, the length of the pressure relief cavity in the battery module can be controlled, so that the problem of thermal spreading is alleviated to some extent, and more importantly, when thermal runaway occurs in the battery module, the thermal runaway sprays flowing out of the battery module passes through the flow-collecting section and the flow-collecting section to the explosion-proof valve in sequence and then are discharged out of the power battery system. Since the guide pipe is provided separately from the battery module equipped with the cells, a gap is reserved between the guide pipe and the cells in the power battery system, therefor, the influence of thermal spreading is greatly reduced.

In addition, when the large surfaces of the cells are transversely arranged, that is, when the cells are placed in a lying manner, a conventional pressure relief cavity structure cannot realize pressure relief. By means of the arrangement method of the pressure relief cavities combined with the guide pipe, when thermal runaway occurs in a cell, the high-temperature and high-pressure sprays are directly discharged into the flow-collecting section through a shorter pressure relief cavity. After passing through the flow-converging section and the explosion-proof valve, the high-temperature and high-pressure sprays are discharged from the power battery system, thereby greatly reducing the risk of thermal spreading in the power battery system.

### BRIEF DESCRIPTION OF THE DRAWINGS

FIG. 1 is an exploded schematic diagram of an entire structure of a power battery system provided in some embodiments of the present disclosure;
FIG. 2 is a top structural schematic diagram of the power battery system provided by some embodiments of the present disclosure after a top shell of a battery box is removed, in which an explosion-proof valve is connected to a structural cover plate by means of a thread connection;
FIG. 3 is a cross-sectional schematic diagram of the structure shown in FIG. 2 taken along line A-A;
FIG. 4 is a structural schematic diagram of the explosion-proof valve and the structural cover plate shown in FIG. 2 in an exploded state viewed from a first perspective;
FIG. 5 is a structural schematic diagram of the explosion-proof valve and the structural cover plate shown in FIG. 2 in an exploded state viewed from a second perspective;
FIG. 6 is another top structural schematic diagram of a power battery system provided by some embodiments of the present disclosure after a top shell of a battery box is removed, in which a structural cover plate is connected to the battery box by means of a flange plate;
FIG. 7 is a cross-sectional schematic diagram of the structure shown in FIG. 6 taken along line B-B;
FIG. 8 is a structural schematic diagram of the explosion-proof valve and the structural cover plate shown in FIG. 6 in an exploded state viewed from a first perspective;
FIG. 9 is a structural schematic diagram of the explosion-proof valve and the structural cover plate shown in FIG. 6 in an exploded state viewed from a second perspective.
FIG. 10 is an exploded schematic diagram of an entire structure of a battery module provided in a first embodiment of the present disclosure;
FIG. 11 is a structural schematic diagram of a module fixing bracket provided in the first embodiment of the present disclosure viewed from a first perspective;
FIG. 12 is a structural schematic diagram of the module fixing bracket shown in FIG. 11 viewed from a second perspective;
FIG 13 is a top view of the battery module provided in the first embodiment of the present disclosure;
FIG. 14 is a cross-sectional schematic diagram of the structure shown in FIG. 13 taken along line D-D;
FIG. 15 is an enlarged schematic diagram of the structure at region B shown in FIG. 14;
FIG. 16 is a structural schematic diagram of a module fixing bracket provided in a second embodiment of the present disclosure;
FIG. 17 is a top view of a battery module provided in the second embodiment of the present disclosure;
FIG. 18 is a cross-sectional schematic diagram of the structure shown in FIG. 17 taken along line C-C;
FIG. 19 is a partial enlarged schematic diagram of the structure at region D shown in FIG. 18.

Reference numerals: 1000, power battery system; 100, pressure relief assembly; 1, guide pipe; 11, flow-collecting section; 12, flow-converging section; 2, explosion-proof valve; 21, extension pipe; 22, threaded hole; 23, bolt; 3, structural cover plate; 31, pressure relief pipe; 32, flange plate; 33, screw hole; 34, position-limiting protrusion; 4, battery module; 40, battery group; 41, cell; 42, pressure relief valve; 43, pressure relief cavity; 44, foam colloid; 45, module fixing bracket; 45', module fixing bracket; 451, fixing bracket body; 451', fixing bracket body; 4511, transition portion; 4512, force-bearing portion; 452, external connection portion; 452', external connection portion; 453, cell avoidance groove; 454, reinforcing rib; 455, mounting hole; 46, pressure-relief and heat-dissipation component; 461, plastic bracket;462, bracket outer cover; 463, pressure relief pipe; 47, structure adhesive layer; 5, housing; 51, assembly hole; 52, threaded hole; 6, sealing structure;7, flow-converging cavity; 8, sealing strip; 81, avoidance hole; 9, U-shaped pipe.

### DETAILED DESCRIPTION

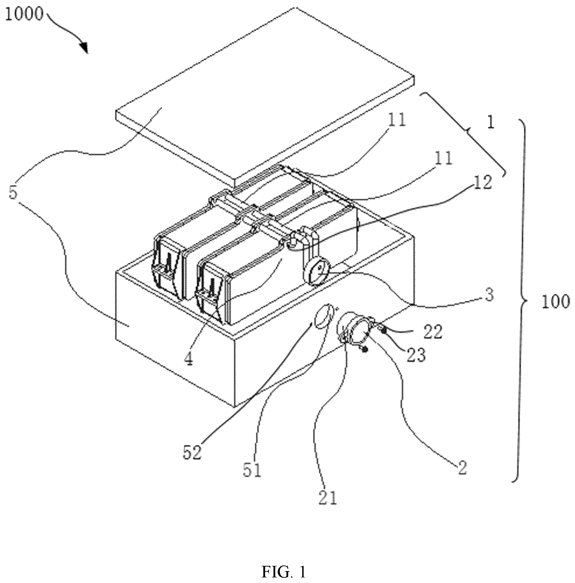

Referring to FIG. 1 to FIG. 3, the present disclosure discloses a pressure relief assembly 100, which is applied to a power battery system 1000. The power battery system 1000 further includes a plurality of battery modules 4 and a housing 5. The plurality of battery modules 4 are arranged in the housing 5. The battery module 4 is provided with a pressure relief cavity 43 and at least one cell 41. The pressure relief assembly 100 is configured to communicate the pressure relief cavities 43 of the plurality of battery modules 4 with an exterior of the housing 5/power battery system 1000.

Specifically, the pressure relief assembly 100 includes a guide pipe 1 and an explosion-proof valve 2. The guide pipe 1 includes a plurality of flow-collecting sections 11 and at least one flow-converging section 12. The pressure relief cavities 43 of the plurality of battery modules 4 are in communication with the plurality of flow-collecting sections 11 respectively. The flow-collecting section 11 is configured to collect thermal runaway substances that may be generated in the pressure relief cavity 43 of the battery module 4 communicating with the flow-collecting section 311. The flow-converging section 12 is configured to converge the thermal runaway substances collected by the flow-collecting sections 11 and discharge the thermal runaway substances through the explosion-proof valve 2. More specifically, two ends of the flow-collecting section 11 are respectively provided with a first port and a second port. The first port is in communication with the pressure relief cavity 43 of the battery module 4, and configured to collect thermal runaway substances generated in the pressure relief cavity 43 of the battery module 4. The second port is in communication with the flow-converging section 12 and configured to transfer the thermal runaway substance collected by the flow-collecting section 11 to the flow-converging section 12. One end of the explosion-proof valve 2 is in communication with the flow-converging section 12, and the other end is in communication with the exterior of the housing 5/power battery system 1000. The guide pipe 1 is independently assembled on the battery module 4, and a gap is reserved between the flow-collecting section 11 and the flow-converging section 12 of the guide pipe 1 and the cells 41 in the power battery system 1000.

A working principle of the above structure is as follows:
When thermal runaway occurs in the battery module 4, the thermal runaway substances in the pressure relief cavity 43 of the battery module 4 flows from the first port to the second port of the flow-collecting section 11, and then flows out of the power battery system 1000 through the flow-converging section 12 and the explosion-proof valve 2. Compared with the related technologies in which the thermal runaway substances generated by the battery module 4 affects other adjacent battery modules 4 when flowing in the pressure relief cavity 43 of the battery module 4, the above structure can shorten and control the length of the pressure relief cavity 43 of each battery module 4 by designing a storage component of the power battery system 1000 in the form of a plurality of battery modules 4; the pressure relief cavities 43 of the plurality of battery modules 4 are respectively communicated to the flow-converging section 12 of the guide pipe 1 by using the plurality of flow-collecting sections 11, in this way, the pressure relief cavities 43 of the plurality of battery modules 4 can be isolated. In this way, after thermal runaway occurs in the battery module 4, the high-temperature and high-pressure substances directly flow into the guide pipe 1 (the flow-collecting section 11 and the flow-converging section 12) via the relatively short pressure relief cavity 43 inside the battery module 4, and will not flow through the pressure relief cavities 43 of other adjacent battery modules 4, thereby greatly reducing the risk and extent of heat spreading, improving the safety performance of the power battery system 1000; in addition, because a gap is reserved between the guide pipe 1 and the battery module 4, after the thermal runaway substances directly flows into the guide pipe 1, the thermal runaway substances lose contact with the battery module 4, thereby further reducing the risk and extent of thermal spreading, and improving the safety performance of the power battery system 1000.

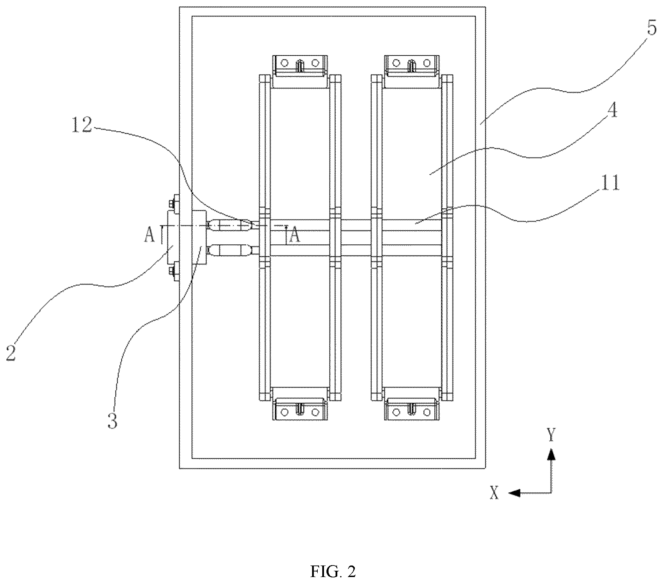

In some embodiments, as shown in FIG. 2 to FIG. 3, the plurality of battery modules 4 are arranged side by side along a preset direction (for example, a direction X shown in FIG. 2) of the power battery system 1000, the cells 41 of the battery modules 4 extend along the preset direction, and the pressure relief cavities 43 of the battery modules 4 are arranged at one side of the battery modules 4 along the preset direction. One end of the cell 41 is provided with the pressure relief valve 42, and the pressure relief valve 42 is in communication with the pressure relief cavity 43. The guide pipe 1 (such as the flow-collecting section 11 or the flow-converging section 12) is arranged above the battery module 4 along the preset direction. The first port of the flow-collecting section 11 of the guide pipe 1 is in communication with the pressure relief cavity 43.

In the above structure, by means of the communication between the pressure relief cavity 43 of the battery module 4 and the flow-collecting section 11 of the guide pipe 1, when thermal runaway occurs in the cell 41, the thermal runaway substances released into the pressure relief cavity 43 by the pressure relief valve 42 of the cell 41 in which thermal runaway occurs can be discharged. Due to the fact that the high-temperature and high-pressure substances are directly discharged into the flow-collecting section 11 through the relatively short pressure relief cavity 43, and then discharged outside the power battery system 1000 through the flow-converging section 12 and the explosion-proof valve 2, the risk of thermal spreading in the power battery system 1000 can be reduced.

Please refer to FIG. 1 to FIG. 3 again, in some embodiments, the power battery system 1000 includes N battery modules 4 (N ≥ 1), and is provided with N flow-collecting sections 11. The first ports of the N flow-collecting sections 11 are in one-to-one communication with pressure relief cavities 43 of the N battery modules 4, while the second ports of the N flow-collecting sections 11 are in communication with the flow-converging section 12.

In some embodiments, the guide pipe 1 may include one flow-converging section 12, which is in communication with the second ports of all of the flow-collecting sections 11. A check valve or the like is arranged at the first port of each of the flow-collecting sections 11 to prevent the thermal runaway substances released by the battery module 4 from flowing into another battery modules 4 during the flow towards the explosion-proof valve 2 in the flow-collecting section 11.

In some embodiments, as shown in FIG. 1 and FIG. 2, the guide pipes 1 may include N flow-converging sections 12. The second ports of the N flow-collecting sections 11 are in one-to-one communication with the N flow-converging sections 12.

In some embodiments, the power battery system 1000 is provided with N battery modules 4 and N flow-collecting sections 11. Based on this structure, the first ports of the N flow-collecting sections 11 are in one-to-one communication with the pressure relief cavities 43 of the N battery modules 4. An opening is provided between the first port and the second port of the flow-collecting section 11. In a direction towards the flow-converging section 12, the second port of the flow-collecting section 11 adjacent to the flow-converging section 12 is in communication with the flow-converging section 12, and the second ports of other flow-collecting sections 11 are sequentially communicated with the openings on adjacent flow-collecting sections 11. That is, the second ports of the other flow-collecting sections 11 are indirectly communicated with the flow-converging section 12 through the adjacent flow-collecting sections 11.

Specifically, the first ports of the flow-collecting sections 11 are mounted to the corresponding battery modules 4 for collecting thermal runaway substances that may be generated in the corresponding battery modules 4. The opening is provided between the first port and the second port of the flow-collecting section 11, and the opening is configured to communicate with the second port of the adjacent flow-collecting section 11, in order to achieve the sequential communication of the N flow-collecting sections, thereby facilitating the design of the guide pipe 1 and reducing the occupation volume of the pressure relief assembly 100 in the power battery system 1000 at the same time. In these embodiments, a check valve or the like is arranged at the first port of each flow-collecting section 11 to prevent the thermal runaway substances released by the battery module 4 from flowing into another battery module 4 during the flow towards the explosion-proof valve 2 in the flow-collecting section 11.

In some embodiments, the explosion-proof valve 2 is directly communicated with the flow-converging section 12, and the flow-collecting section 11 is communicated with the pressure relief cavities 43 of two adjacent battery modules 4, thereby achieving the collection and discharge of the thermal runaway substances in the case of a plurality of battery modules 4.

In some embodiments, the flow-converging section 12 of the guide pipe 1 is a main pipe, the flow-collecting section 11 is a branch pipe, the main pipe is arranged above each battery module 4 along the preset direction, one end of each branch pipe is in communication with the pressure relief cavity 43 of the battery modules 4, and the other end is in communication with the main pipe. The above structure forms a reliable pressure relief pipeline with a simple pipe network structure. Similarly, designers may provide a check valve at one end of the branch pipe connected to the pressure relief cavity 43 according to usage requirements to prevent the thermal runaway substances from flowing into other normal battery modules 4.

Referring to FIG. 1 again, in some embodiments, in order to facilitate installation of the explosion-proof valve 2, the housing 5 of the power battery system 1000 is provided with an assembly hole 51. The explosion-proof valve 2 is mounted in the assembly hole 51 and is configured to communicate inside and outside of the power battery system 1000. In addition, structures such as snap-fit structures or threaded holes for fixing the explosion-proof valve 2 may also be provided near the assembly hole 51. In this embodiment, threaded holes 52 are provided near the assembly hole 51 of the housing 5, and the explosion-proof valve 2 is provided with threaded holes 22 corresponding to the threaded holes 52 on the housing 5. The fixation of the explosion-proof valve 2 and the housing 5 is completed by a bolt 23 passing through the threaded hole 52 provided near the assembly hole 51 and the threaded hole 22 provided on the explosion-proof valve 2.

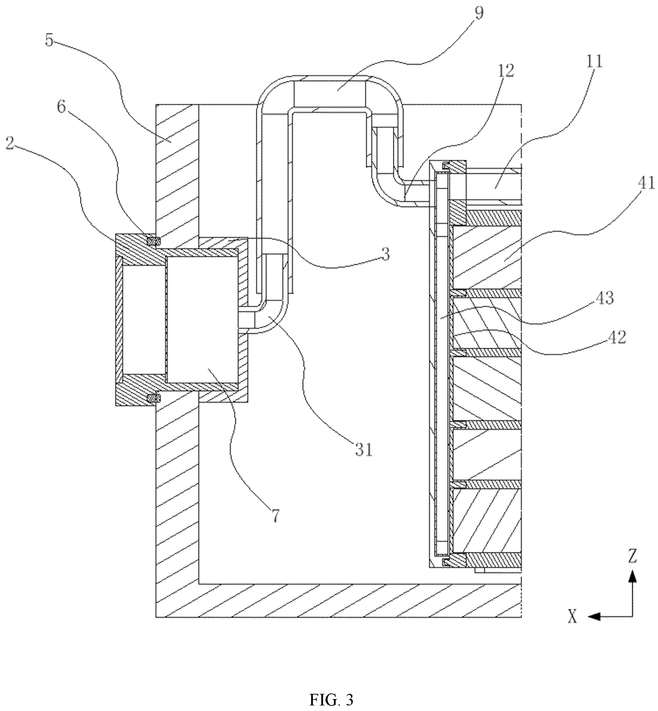

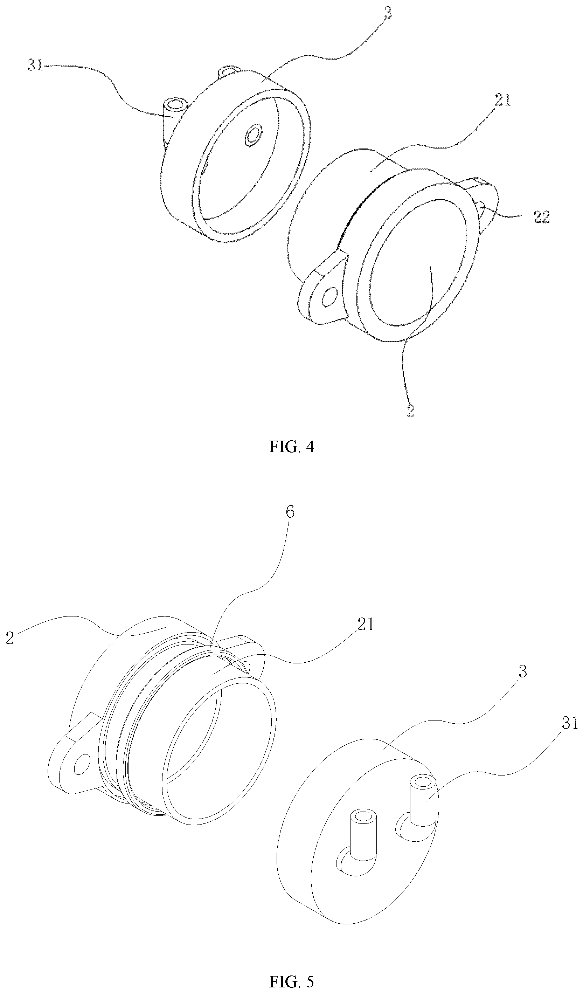

Please refer to FIG. 3 and FIG. 5, in some embodiments, in order to improve the sealing performance of a joint between the explosion-proof valve 2 and the assembly hole 51, a sealing structure 6 is provided at the joint between the explosion-proof valve 2 and the assembly hole 51. The sealing structure 6 can ensure the sealing performance between the explosion-proof valve 2 and the assembly hole 51, and prevent the thermal runaway substances from escaping from the joint between the explosion-proof valve 2 and the assembly hole 51.

Specifically, the sealing structure 6 may be a member or a coating, such as a sealing ring, a sealing strip, or a sealant that can enhance the air tightness at the joint between the explosion-proof valve 2 and the assembly hole 51. In this embodiment, the sealing structure 6 is a sealing ring, which is sleeved on one side of the explosion-proof valve 2 facing the housing 5. When the explosion-proof valve 2 is assembled, the sealing ring seals a contact position between the explosion-proof valve 2 and the assembly hole 51, thereby improving the sealing performance between the explosion-proof valve 2 and the assembly hole 51.

Referring to FIG. 1 to FIG. 5, in some embodiments, in order to facilitate the connection between the explosion-proof valve 2 and the flow-converging section 12, a structural cover plate 3 is provided between the explosion-proof valve 2 and the flow-converging section 12. The structural cover plate 3 is connected to the explosion-proof valve 2, and a flow-converging cavity 7 is formed between the structural cover plate 3 and the explosion-proof valve 2. The flow-converging cavity 7 is configured to initially collecting the thermal runaway substances discharged from the flow-converging section 12. The flow-converging section 12 is in communication with the flow-converging cavity 7 via the structural cover plate 3. With this solution, the structural cover plate 3 can provide a more convenient installation foundation for the communication between the flow-converging section 12 and the explosion-proof valve 2.

In some embodiments, the structural cover plate 3 is provided with a pressure relief pipe 31. One end of the pressure relief pipe 31 is in communication with the flow-converging section 12, and the other end of the pressure relief pipe 31 is in communication with the flow-converging cavity 7. Specifically, the structural cover plate 3 is provided with the pressure relief pipe 31 that facilitates communication with the flow-converging section 12. The flow-converging section 12 is in communication with the pressure relief pipe 31, which facilitates the assembly of the explosion-proof valve 2 and the flow-converging section 12. Certainly, the flow-converging section 12 may also communicate with the pressure relief pipe 31 in an indirect connection manner, for example, in this embodiment, the flow-converging section 12 is in communication with the pressure relief pipe 331 through a U-shaped pipe 9.

On the basis of the above structure, the structure of the explosion-proof valve 2 is mainly divided into two types:
Firstly, please refer to FIG. 1 to FIG. 5, the explosion-proof valve 2 is provided with an extension pipe 21, and the housing 5 of the power battery system 1000 is provided with an assembly hole 51. The extension pipe 21 passes through the assembly hole 51 from an outer side of the housing 5, and is in threaded connection with the structural cover plate 3 at an inner side of the housing 5. In the above structure, the extension pipe 21 is arranged on the explosion-proof valve 2, and the extension pipe 21 is threaded to the structural cover plate 3 after passing through the assembly hole 51, therefore, the air tightness of the flow-converging cavity 7 formed by the explosion-proof valve 2 and the structural cover plate 3 is better, and the assembly of the explosion-proof valve 2 and the structural cover plate 3 is more convenient. The threaded connection between the structural cover plate 3 and the extension pipe 21 can be achieved by providing matching threads for the threaded connection between the structural cover plate 3 and the extension pipe 21.

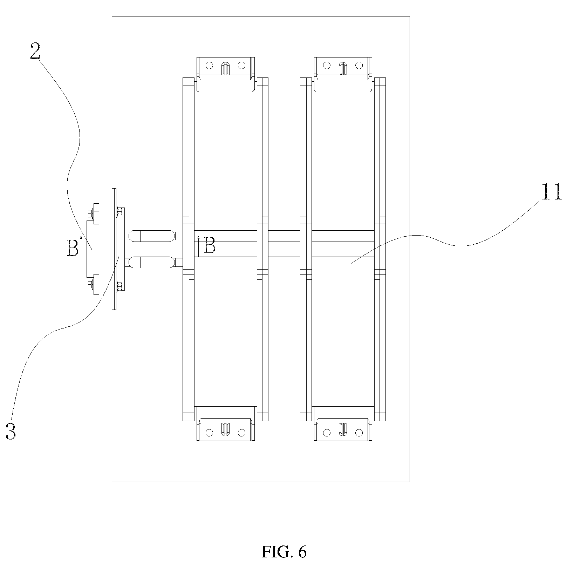

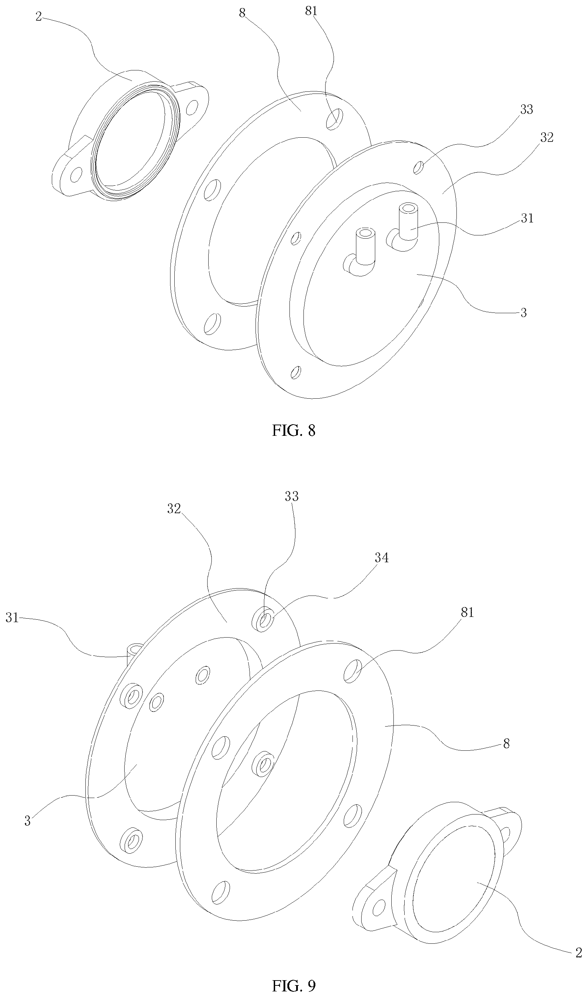

Second, as shown in FIG. 6 to FIG. 9, an outer edge of the structural cover plate 3 extends to form a flange plate 32. The structural cover plate 3 is fixedly connected to the housing 5 via the flange plate 32, thereby greatly improving air tightness at the joint between the structural cover plate 3 and the housing 5.

In some embodiments, in order to further improve the air tightness of the joint between the structural cover plate 3 and the housing 5, a sealing strip 8 is provided between the flange plate 32 and the housing 5. The sealing strip 8 is provided on a coverage surface of the housing 5 along the flange plate 32, and a surface of the flange plate 32 facing the sealing strip 8 is provided with position-limiting protrusions 34. The position-limiting protrusions 34 can control a distance between the flange plate 32 and the housing 5, thereby controlling a compression amount of the sealing strip 8 and ensuring the air tightness and stability of the sealing strip 8.

In some embodiments, the flange plate 32 is mounted to the housing 5 via bolts. The flange plate 32 is provided with screw holes 33 through which the bolts pass, and the position-limiting protrusion 34 is provided along an edge of a hole diameter of the screw hole 33. The sealing strip 8 is provided with an avoidance hole 81 at a position corresponding to the screw hole 33, and the position-limiting protrusion 34 is provided to pass through the avoidance hole 81. According to the above structure, the flange plate 32 is provided with the position-limiting protrusions 34 at the screw holes 33, and the sealing strip 8 is correspondingly provided with the avoidance holes 81 for avoiding the position-limiting protrusions 34. The position-limiting protrusions 34 pass through the avoidance holes 81 and abut against the housing 5, so that the compression amount of the sealing strip 8 can be controlled, and the problem of excessive compression of the sealing strip 8 can be avoided, thereby improving the sealing performance and stability of the sealing strip 8. In addition, the engagement between the avoidance holes 81 and the position-limiting protrusions 34 also facilitates the positioning and installation of the sealing strip 8.

Of course, the designers can also set the number and positions of the screw holes 33 and correspondingly set the number and positions of the position-limiting protrusions 34 and the avoidance holes 81 according to requirements, thereby improving the stability of the connection between the structural cover plate 3 and the housing 5.

In addition, in the present disclosure, a plurality of guide pipes can be provided according to requirements, and the connection method thereof can use one of the described connection methods. In this embodiment, two guide pipes are provided to improve the flux per unit time, thereby improving the safety of the power battery system.

In addition, in an existing power battery system or battery pack, cells of a cylindrical battery module is generally placed vertically, and a corresponding mounting and fixing structure is in the form of a tray, that is, an existing tray is configured to mount and fix the cells.

Since the tray itself occupies a certain space, after the pressure relief assembly is configured on the cylindrical battery module, an overall height of the cylindrical battery module includes a first height dimension of the tray, a height of the cells along a central axis direction, and a second height dimension of the pressure relief assembly, resulting in the overall height of the battery pack being relatively high.

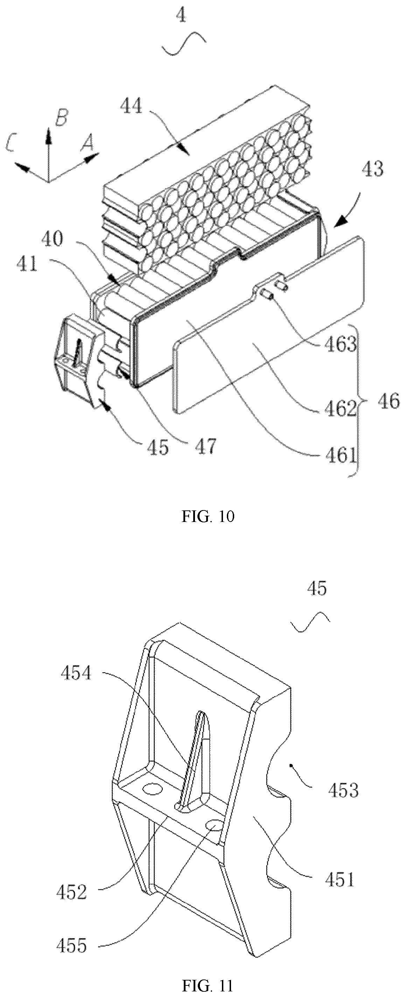

In the embodiment of the present disclosure, referring to FIG. 10, the battery module 4 includes foam colloids 44, module fixing brackets 45 and a plurality of battery-row modules arranged in parallel. The plurality of battery-row modules are arranged in parallel to form a battery group 40, and each of the battery-row modules includes a plurality of cells 41. The plurality of cells 41 are evenly arranged along a first direction A, where the first direction A is perpendicular to an arrangement direction B of the plurality of battery-row modules. The cells 41 extend in the direction C.

In some embodiments, the cell 41 is a cylindrical cell, and it is defined that the cell 41 has a cell positive electrode end and a cell negative electrode end that are oppositely arranged. The pressure relief valve 42 of the cell 41 is located at one end of the cell 41, for example, may be located at the cell positive electrode end of the cell 41, or may be located at the cell negative electrode end of the cell 41. The plurality of cells 41 are connected in series or parallel through conductive bars. In addition, the pressure relief valves 42 of each f the cells 41 in the battery group 40 are located at the same side of the battery group 40, and the cells 41 of two adjacent battery-row modules are arranged in a staggered manner in the first direction A.

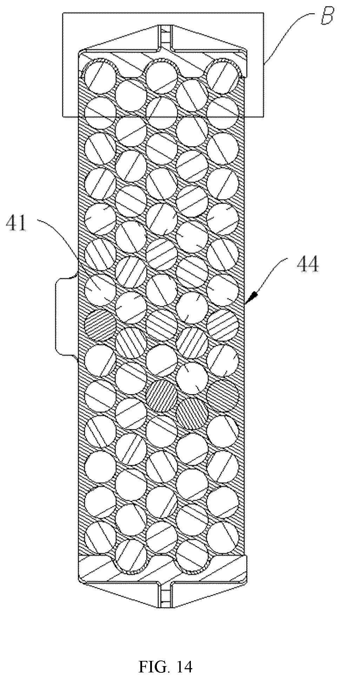

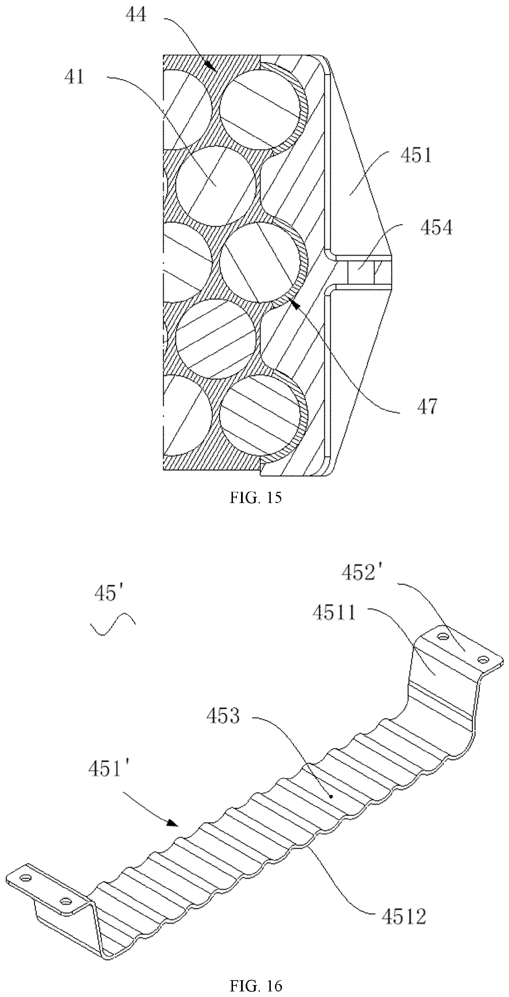

In this embodiment, as shown in FIG. 14 and FIG. 15, the foam colloids 44 are arranged between adjacent cells 41, and the foam colloids 44 wrap each cell 41. Specifically, the foam colloids 44 wrap the peripheries of the cell 41 and the pressure relief valves of the cells 41. The foam colloid 44 is polyurethane or organic silicon glue, which is not specifically limited herein. In this way, by completely wrapping the cells 41 with the foam colloids 44, not only can the foam colloids 44 having good flame-retardant and and thermal-insulation capability can be used to prevent heat, substances, flames, etc. generated by any one of the cells 41 due to thermal runaway from being transferred to its adjacent cells 41, but also the cells 41 can be compactly connected together under the action of the foam colloids 44.

The module fixing brackets 45 are at least provided at two opposite sides of the battery group 40 along the first direction A, and is connected to peripheral surfaces of adjacent cells 41. The module fixing brackets 45 are configured to cooperate with the foam colloids 44 to fix the cells 41 of the battery group 40 together from peripheral surfaces of the cells 41.

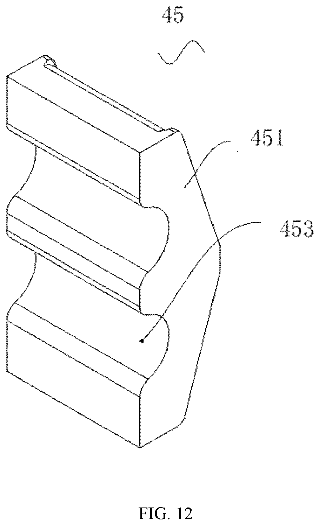

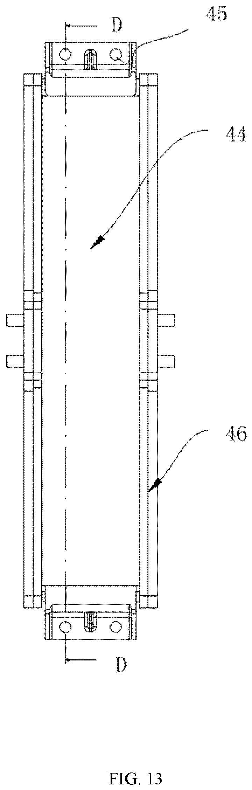

In a first implementation, specifically as shown in FIG. 10 to FIG. 15, the module fixing brackets 45 are arranged at two opposite ends of each of the battery-row modules along the first direction A, and are fixedly connected to corresponding end portions of the battery-row module. The foam colloids 44 cooperate with the module fixing brackets 45 to fix the cells 41 from peripheral surface of the cells 41. That is, the foam colloids 44, in cooperation with the module fixing brackets 45, can act on the peripheral surfaces of the cells 41, so that the cells 41 can be restrained in both a radial direction and a central axis direction C of each cell 41, thereby achieving the purpose of fixing each cell 41 of the battery-row module.

It should be noted that the central axis direction C here is also the direction in which the cells 41 extend.

Specifically, the module fixing bracket 45 acts on the peripheral surfaces of the cells 41 in the battery-row module, directly constraining the movement of each cell 41 in its radial direction. When the module fixing bracket 45 is fixed to the housing 5, the plurality of battery-row modules can be stably restrained, so that the plurality of battery-row modules remain stationary. At the same time, the foam colloids 44 adhere to the peripheral surfaces of the cells 41, and the module fixing brackets 45 are fixedly connected to the battery-row modules, which can also directly restrain the movement of each cell 41 in the central axis direction C.

In the first implementation, specifically as shown in FIG. 11 to FIG. 15, the module fixing bracket 45 includes a fixing bracket body 451 and an external connection portion 452 provided on the fixing bracket body 451. The external connection portion 452 is configured to be fixedly connected to the housing 5, and the fixing bracket body 451 is adhered to the peripheral surfaces of the cells 41 in the battery group 40. A surface of the fixing bracket body 451 close to and acting on the battery-row module is defined as a bracket body inner surface of the fixing bracket body 451, and a surface of the fixing bracket body 451 away from the battery-row module is defined as a bracket body outer surface.

Specifically, the bracket body inner surface of the fixing bracket body 451 is coated and formed with a structural adhesive layer 47. Other types of adhesive can be selected here according to structural design and design requirements. Of course, the structural adhesive layer 47 may be coated a portion of the bracket body inner surface, and may also be coated an entire bracket body inner surface. By using the viscosity of the structural adhesive layer 47, the cells 41 in the battery-row module adjacent to the fixing bracket body 451 can be adhered to the fixing bracket body 451.

Specifically, referring to FIG. 11 to FIG. 15, the fixing bracket body 451 is provided with cell avoidance grooves 453. In some embodiments, the shape of the cell avoidance groove 453 is adapted to the shape of the peripheral surface of the cell 41. An inner wall of the cell avoidance groove 453 is coated with the structural adhesive layer 47, and the cells 41 are correspondingly embedded inside the cell avoidance grooves 453, which not only firmly limits the cells 41 in the radial direction of the cells 41, thereby stably restraining the movements of the plurality of battery-row modules in the first direction A and the arrangement direction B. In addition, the peripheral surfaces of the cells 41 are adhered to the inner walls of the cell avoidance grooves 453 through the structural adhesive layers 47, thereby preventing the cells 41 in the battery-row modules from detaching from the cell avoidance groove 453 of the fixing bracket body 451.

In some embodiments, in the battery-row module, a part of the peripheral surfaces of the cells 41 adjacent to the fixing bracket body 451 are covered by the foam colloids 44, and the peripheral surfaces of the cells 41, which are not covered by the foam colloids 44, are adhered to the structural rubber layer 47. Certainly, the peripheral surfaces of the cells 41 in the battery-row module adjacent to the fixing bracket body 451 may also be completely covered by the foam colloids 44, and the foam colloids 44 are adhered to the structural rubber layer 47.

During installation, the structural adhesive layer 47 is first coated in the cell avoidance grooves 453 of the fixing bracket body 451, the module fixing bracket 45 is adhered to the plurality of battery-row modules by using the structural adhesive layer 47, and then the foam colloids 44 are injected between the plurality of battery-row modules, so that reliable connection is implemented between the module fixing bracket 45 and the plurality of battery-row modules.

In the first implementation, specifically as shown in FIG. 10 and FIG. 15, the fixing bracket body 451 extends along the arrangement direction B of the plurality of battery-row modules. Furthermore, the fixing bracket body 451 adheres to the peripheral surfaces of the cells 41 at an end portion of each battery-row module along the first direction A, thus, in cooperation with the foam colloids 44, each cell 41 can be securely mounted and fixed in the housing 5.

In some embodiments, specifically as shown in FIG. 10 and FIG. 14, two opposite sides of the battery group 40 are provided with the module fixing bracket 45. Specifically, two module fixing brackets 45 are arranged in the first direction A of the battery group 40, and the two module fixing brackets 45 are respectively arranged at two opposite sides of the battery group 40. In this way, the battery module 4 can be more securely assembled in the housing 5, thereby avoiding the phenomenon of loose of the battery pack due to vibration and shaking during use.

In some embodiments, specifically as shown in FIG. 11, at least one reinforcing rib 454 is arranged between the fixing bracket body 451 and the external connection portion 452, so as to enhance an overall structural strength of the module fixing bracket 45, thereby improving the overall stability of the battery module 4 and the battery pack.

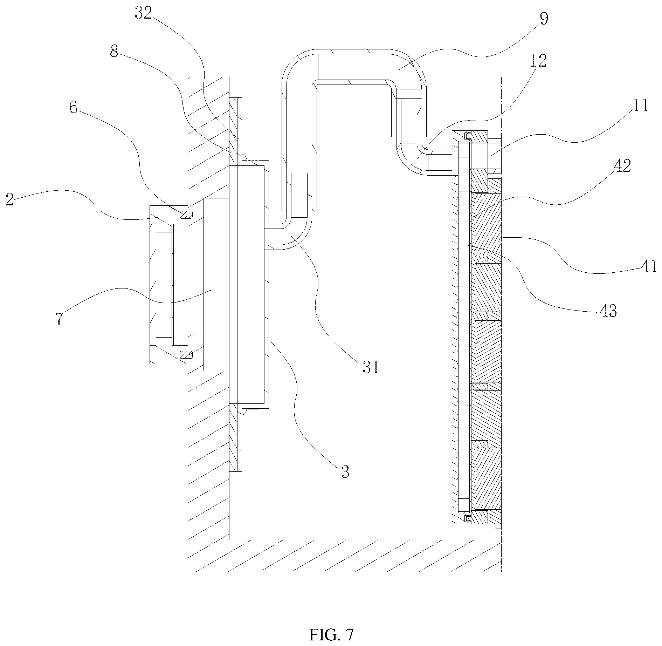

Referring to FIG. 7 and FIG. 10 again, in some embodiments, the battery module 4 further includes a pressure-relief and heat-dissipation component 46. The pressure-relief and heat-dissipation component 46 is arranged at one end of each of the cells 41 in the battery group 40 along the central axis direction C of the cell 41, i.e. the pressure-relief and heat-dissipation component 46 covers each cell 41 in an orthographic projection direction and faces the pressure relief valve 42 of the cell 41. When the pressure relief valve 42 of any one of the cells 41 is opened in a thermal runaway state, it can communicate the corresponding cell 41 to the pressure relief cavity 43 inside the pressure-relief and heat-dissipation component 46. In this way, when thermal runaway occurs in any one of the cells 41, it will ensure that the high-temperature and high-pressure sprays released by the cell 41 impacts the pressure relief cavity 43 of the pressure-relief and heat-dissipation component 46.

In some embodiments, specifically as shown in FIG. 10, the pressure-relief and heat-dissipation component 46 includes a plastic bracket 461 and a bracket outer cover 462 covering the plastic bracket 461. The plastic bracket 461 cooperates with the bracket outer cover 462 to form the pressure relief cavity 43. The bracket outer cover 462 is provided with a pressure relief pipe 463 in communication with the pressure relief cavity 43. The pressure relief cavity 43 is in communication with the flow-collecting section 11 of the guide pipe 1 through the pressure relief pipe 463. The plastic bracket 461 is provided with pressure relief portions corresponding to the cells 41.

Specifically, the pressure relief portion may be selected as an exhaust hole or a weakened portion. The foam colloids 44 are further filled between the plastic bracket 461 and the cells 41, so as to seal an assembly gap between the pressure relief valves 42 of the cells 41 and the pressure relief portions of the plastic bracket 461, thereby preventing the pressure relief valves 42 of the cells 41 from being exposed.

When thermal runaway occurs in any one of the cells 41, the high-temperature and high-pressure sprays released from the pressure relief valve 42 of the cell 41 squeeze and break through the foam colloid 44 close to the pressure relief valve 42, then enter the pressure relief cavity 43, and are finally discharged to the outside of the pressure relief cavity 43 under the guidance of the pressure relief cavity 43.

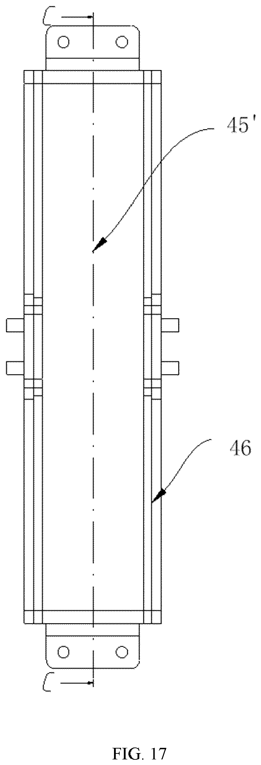

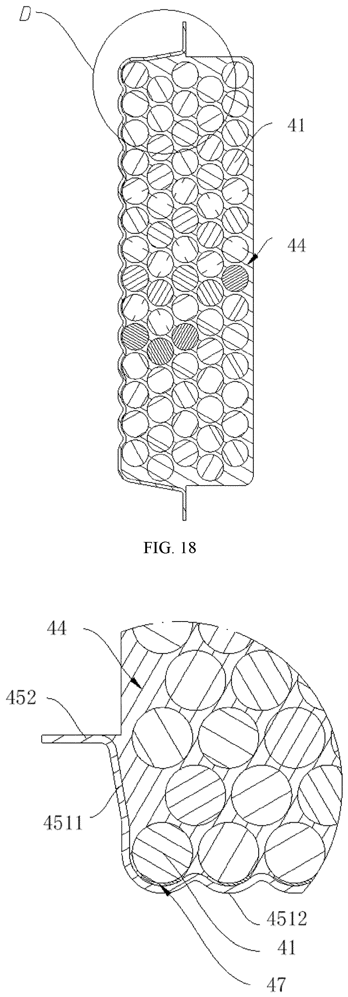

In a second implementation, specifically as shown in FIG. 16 to FIG. 19, a module fixing bracket 45' wraps outside the battery group 40 along the first direction A. Specifically, the module fixing bracket 45' includes a fixing bracket body 451' and external connection portions 452' arranged on two opposite ends of the fixing bracket body 451'. The fixing bracket body 451' covers at least one side of the battery group 40 along the arrangement direction of the plurality of battery-row modules and covers two opposite sides of the battery group 40 along the first direction A, and the external connection portions 452' are configured to be fixedly connected to the housing 5. In the second implementation, the fixing bracket body 451' includes a transition portion 4511 and a force-bearing portion 4512 extending along the first direction A. The transition portion 4511 is connected between the force-bearing portion 4512 and the external connection portion 452'. The force-bearing portion 4512 is configured to adhere the peripheral surfaces of the cells 41 that are located on at least one side of the battery group 40 along the arrangement direction of the plurality of battery-row modules. The transition portion 4511 is configured to adhere the peripheral surfaces of the cells 41 that are located on two opposite sides of the battery group 40 along the first direction A.

In some embodiments, the force-bearing portion 4512, the transition portion 4511, and the external connection portion 452' are integrally formed, so as to better ensure the structural strength and other comprehensive properties of the fixing bracket body 451'. The two external connection portions 452' are connected to opposite ends of the force-bearing portion 4512 through corresponding transition portions 4511. In this way, the two external connection portions 452' cooperate with the foam colloids 44 to firmly fix each of the cells 41 to the housing 5.

In some embodiments, the force-bearing portion 4512 is provided with the cell avoidance grooves 453. An inner wall of the cell avoidance groove 453 is coated with a structural adhesive layer 47, and the cells 41 are correspondingly embedded inside the cell avoidance groove 453. In this way, the cells 41 are firmly limited in the radial direction of the cells 41, so that the movements of the plurality of battery-row modules in the first direction A and the arrangement direction B can be stably restrained. In addition, the peripheral surfaces of the cells 41 are adhered to the inner walls of the cell avoidance grooves 453 through the structural adhesive layer 47, which prevents the cells 41 in the battery-row modules from detaching from the cell avoidance groove 453 of the fixing bracket body 451' .

In the battery module 4 of the present disclosure, by means of the cooperation between the foam colloids 44 and the module fixing bracket 45 or 45', the radial constraint of the movements of each cell in the battery-row modules is achieved, thereby replacing the existing tray installation and fixing manner for cells, and reducing the height dimension of the existing cylindrical battery module while ensuring the stable assembly of each cell.

## Claims

1. A pressure relief assembly (100), applied to a power battery system (1000); wherein the power battery system (1000) further comprises a plurality of battery modules (4); the battery module (4) is internally provided with a pressure relief cavity (43) and at least one cell (41); **characterized in that** the pressure relief assembly (100) comprises:
a guide pipe (1) comprising a plurality of flow-collecting sections (11) and at least one flow-converging section (12); wherein the plurality of flow-collecting sections (11) are respectively in communication with the pressure relief cavities (43) of the plurality of battery modules (4); the flow-collecting section (11) is provided with a first port and a second port, wherein the first port is in communication with the pressure relief cavity (43) of a corresponding battery module (4), and the second port is in communication with the flow-converging section (12); and
an explosion-proof valve (2), wherein one end of the explosion-proof valve (2) is in communication with the flow-converging section (12), and the other end is in communication with an exterior of the power battery system (1000);
wherein a gap is reserved between both the flow-collecting section (11) and the flow-converging section (12) and the cells (41) in the power battery system (1000).

2. The pressure relief assembly (100) according to claim 1, **characterized in that** the plurality of battery modules (4) are arranged side by side along a preset direction of the power battery system (1000), the cells (41) of the battery modules (4) extend along the preset direction, and the pressure relief cavity (43) of the battery module (4) is arranged at one side of the battery modules (4) along the preset direction; wherein one end portion of the cell (41) is provided with the pressure relief valve (42) that is in communication with the pressure relief cavity (43); wherein the guide pipe (1) is arranged above the battery module (4) along the preset direction.

3. The pressure relief assembly (100) according to claim 1 or 2, **characterized in that** the power battery system is provided with N battery modules (4) and N flow-collecting sections (11), wherein N ≥ 1; the first ports of the N flow-collecting sections (11) are in one-to-one communication with the pressure relief cavities (43) of the N battery modules (4);
the second ports of the N flow-collecting sections (11) are in communication with the flow-converging sections (12); or
an opening is provided between the first port and the second port of the flow-collecting section (11), and in a direction towards the flow-converging section (12), the second port of the flow-collecting section (11) close to the flow-converging section (12) is communicated with the flow-converging section (12), and the second ports of other flow-converging sections (12) are sequentially communicated with the openings on adjacent flow-collecting sections (11).

4. The pressure relief assembly (100) according to any one of claims 1 to 3, **characterized in that** the housing (5) of the power battery system is provided with an assembly hole (51); wherein the explosion-proof valve (2) is mounted in the assembly hole (51); wherein a joint between the explosion-proof valve (2) and the assembly hole (51) is provided with a sealing structure (6).

5. The pressure relief assembly (100) according to any one of claims 1 to 4, **characterized in that** a structural cover plate (3) is provided between the explosion-proof valve (2) and the flow-converging section (12); wherein the structural cover plate (3) is connected to the explosion-proof valve (2), and a flow-converging cavity (7) is formed between the structural cover plate (3) and the explosion-proof valve (2); wherein the flow-converging section (12) is in communication with the flow-converging cavity (7)via the structural cover plate (3).

6. The pressure relief assembly (100) according to claim 5, **characterized in that** the structural cover (3) is provided with a pressure relief pipe (31); wherein one end of the pressure relief pipe (31) is in communication with the flow-converging section (12), and the other end of the pressure relief pipe (31) is in communication with the flow-converging cavity (7); or
the explosion-proof valve (2) is provided with an extension pipe (21), and the housing (5) of the power battery system (1000) is provided with an assembly hole (51); wherein the extension pipe (21) passes through the assembly hole (51) from an outer side of the housing (5), and is in a threaded connection with the structure cover plate (3) at an inner side of the housing (5).

7. The pressure relief assembly (100) according to claim 5, **characterized in that** an outer edge of the structural cover plate (3) extends to form a flange plate (32), and the structural cover plate (3) is fixedly connected to the housing (5) via the flange plate (32).

8. The pressure relief assembly (100) according to claim 7, **characterized in that** a sealing strip (8) is provided between the flange plate (32) and the housing (5); wherein the sealing strip (8) is provided on a covering surface of the housing (5) along the flange plate (32); wherein a surface of the flange plate (32) facing the sealing strip (8) is provided with position-limiting protrusions (34);
the flange plate (32) is mounted to the housing (5) by bolts; wherein the flange plate (32) is provided with screw holes (33) through which the bolts pass, and the position-limiting protrusion (34) is provided along an aperture edge of the screw hole (33); the sealing strip (8) is provided with avoidance holes (81) at positions corresponding to the screw holes (33), and the position-limiting protrusions (34) are provided to pass through the avoidance holes (81).

9. A power battery system (1000), **characterized by** comprising:
a housing (5);
a plurality of battery modules (4) arranged in the housing (5); and
the pressure relief assembly (100) according to any one of claims 1 to 8, wherein the housing (5) is provided with an assembly hole (51); wherein the explosion-proof valve (2) is mounted in the assembly hole (51).

10. The power battery system (1000) according to claim 9, **characterized in that** the battery module (4) comprises:
a battery group (40) comprising a plurality of battery-row modules arranged in parallel; wherein each of the battery-row modules comprises a plurality of cells (41); the plurality of cells (41) are evenly arranged along a first direction, wherein the first direction is perpendicular to an arrangement direction of the plurality of battery-row modules;
foam colloids (44) arranged between adjacent cells (41), wherein the foam colloids (44) wrap each cell (41); and
module fixing brackets (45, 45') at least provided at two opposite sides of the battery group (40) along the first direction and connected to peripheral surfaces of adjacent cells (41); wherein the module fixing brackets (45, 45') are configured to cooperate with the foam colloids (44) to fix the cells (41) of the battery group (40) together from the peripheral surfaces of the cells (41).

11. The power battery system (1000) according to claim 10, **characterized in that** the module fixing bracket (45, 45') comprises a fixing bracket body (451, 451'), and an external connection portion (452, 452') provided on the fixing bracket body (451, 451'); wherein the external connection portion (452, 452') is configured to be fixedly connected to the housing (5); the fixing bracket body (451, 451') is adhered to the peripheral surfaces of the cells (41) of the battery group (40);
the fixing bracket body (451, 451') is provided with cell avoidance grooves (453); wherein a shape of the cell avoidance groove (453) is adapted to a shape of the peripheral surface of the cell (41).

12. The power battery system (1000) according to claim 11, **characterized in that** the module fixing brackets (45) are provided at two opposite ends of each of the battery-row modules along the first direction, and are fixedly connected to corresponding end portions of the battery-row module; the foam colloids (44) cooperate with the module fixing brackets (45) to fix the cells (41) from peripheral surface of the cells (41); wherein the fixing bracket body (451) is configured to adhere the peripheral surfaces of the cells (41) at an end portion of each of the battery-row modules along the first direction.

13. The power battery system (1000) according to claim 11, **characterized in that** the external connection portion (452') is provided at two opposite ends of the fixing bracket body (451');
the fixing bracket body (451') comprises a transition portion (4511) and a force-bearing portion (4512) extending along the first direction, wherein the transition portion (4511) is connected between the force-bearing portion (4512) and the external connecting part (452'); the force-bearing portion (4512) is configured to adhere the peripheral surfaces of the cells (41) that are located on at least one side of the battery group (40) along the arrangement direction of the plurality of battery-row modules; the transition portion (4511) is configured to adhere the peripheral surfaces of the cells (41) that are located on two opposite sides of the battery group (40) along the first direction.

14. The power battery system (1000) according to claim 10, **characterized in that** the pressure relief valve (42) of the cell (41) is located at one end of the cell (41); the pressure relief valves (42) of the cells (41) in the battery group (40) are located on the same side of the battery group (40);
the battery module (4) further comprises a pressure-relief and heat-dissipation component (46), wherein the pressure-relief and heat-dissipation component (46) is arranged at one end of each of the cells (41) in the battery group (40) along a central axis direction of the cell and faces the pressure relief valve (42) of the cell (41); wherein when the pressure relief valve (42) of any one of the cells (41) is opened in a thermal runaway state, the pressure relief valve (42) communicates the corresponding cell (41) to the pressure relief cavity (43) inside the pressure-relief and heat-dissipation component (46).

15. The power battery system (1000) according to claim 14, **characterized in that** the pressure-relief and heat-dissipation component (46) comprises a plastic bracket (461) and a bracket outer cover (462) covering the plastic bracket (461); wherein the plastic bracket (461) cooperates with the bracket outer cover (462) to form the pressure relief cavity (43); the bracket outer cover (462) is provided with a pressure relief pipe (463) in communication with the pressure relief cavity (43); the pressure relief cavity (43) is in communication with the flow-collecting section (11) of the guide pipe (1) through the pressure relief pipe (463); the plastic bracket (461) is provided with pressure relief portions corresponding to the cells (41).
